# FASCICULE DE BREVET EUROPEEN

(11) **EP 1 130 228 B1**
(45) Date de publication et mention de la délivrance du brevet: **30.03.2005**
(21) Numéro de dépôt: 01400107.7
(22) Date de dépôt: 15.01.2001
(51) Int. Cl.: F01N 3/023, F02D 41/40

(54) **Système d'aide à la régénération d'un filtre à particules intégré dans une ligne d'échappement d'un moteur diesel de véhicule automobile**
Vorrichtung zur Regenierung eines Partikelfilters in einer selbstgezündeten Brennkraftmaschine
System to regenerate an exhaust particle filter in a diesel engine

(30) Priorité: 20.01.2000 FR 0000698
(43) Date de publication de la demande: 05.09.2001
(73) Titulaire: Peugeot Citroen Automobiles SA, 92200 Neuilly sur Seine (FR)
(72) Inventeur: Salvat, Olivier, 75010 Paris (FR); Le Tallec, Patrice, 78500 Sartrouville (FR)
(74) Mandataire: Habasque, Etienne Joel Jean-François

(56) Documents cités:
- EP-A- 0 411 445
- DE-A- 19 746 855
- FR-A- 2 774 427
- US-A- 4 685 290
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- STAMATELOS A M: "A review of the effect of particulate traps on the efficiency of vehicle diesel engines" ENERGY CONVERSION AND MANAGEMENT,GB,ELSEVIER SCIENCE PUBLISHERS, OXFORD, vol. 38, no. 1, 1997, pages 83-99, XP004040036 ISSN: 0196-8904
- PATENT ABSTRACTS OF JAPAN vol. 1996, no. 02, 29 février 1996 (1996-02-29) & JP 07 259533 A (NIPPON SOKEN INC), 9 octobre 1995 (1995-10-09)
- DIRECTION DE LA COMMUNICATION: "Particule Filter System" PEUGEOT PRESS RELEASE, [en ligne] 15 avril 1999 (1999-04-15), XP002148817 Extrait de l'Internet: <URL:www.psa.fr/presse/en_99018.html> [extrait le 2000-09-28]

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, et caractérisé en ce qu'il comporte des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle sont associés à des moyens de détermination de la charge en particules du filtre à particules, pour réguler le fonctionnement du moteur et des organes associés à celui-ci et permettre un fonctionnement à isoperformance du moteur.

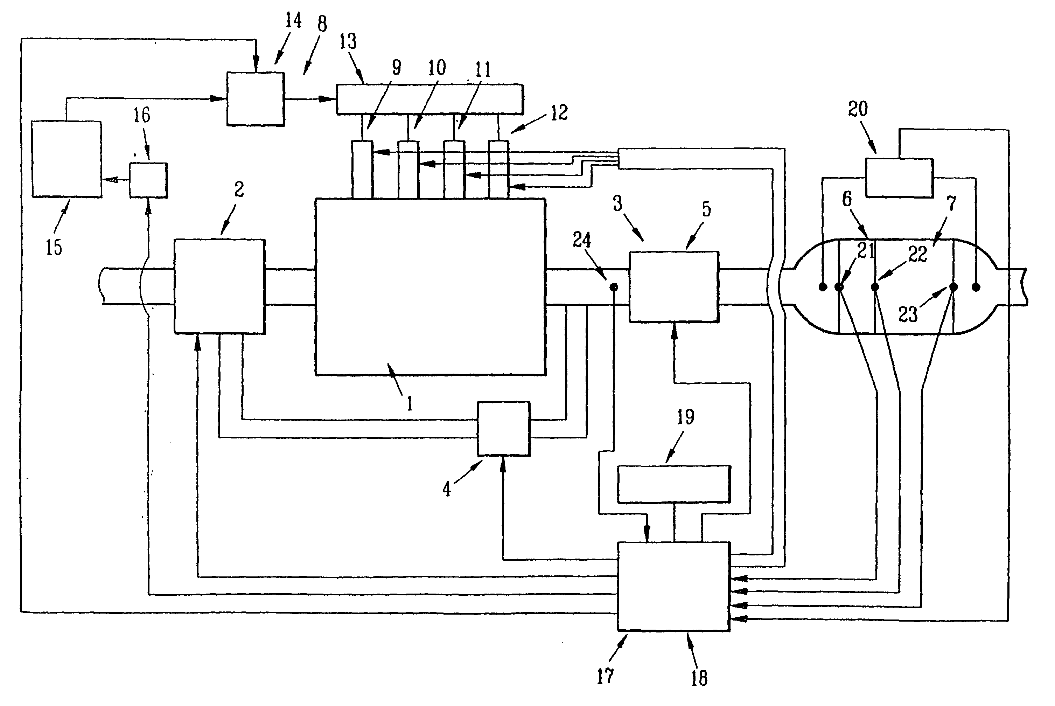

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci.

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour piloter le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Les moyens de contrôle 17 sont également associés à des moyens de détermination de la charge en particules du filtre 7 pour permettre une régulation du fonctionnement du moteur et des organes associés à celui-ci afin d'obtenir un fonctionnement à isoperformance du moteur.

En effet, la charge en particules du filtre augmente progressivement lors du fonctionnement du moteur, ce qui dégrade progressivement les performances de fonctionnement du moteur.

La détermination de la charge en particules du filtre 7 peut par exemple être réalisée par les moyens de contrôle 17 et plus particulièrement le calculateur 18 à partir des informations délivrées par le capteur de pression différentielle 20 ou encore à partir de moyens d'évaluation de celle-ci.

La pression différentielle aux bornes du filtre à particules 7 est en effet proportionnelle à la charge en particules de celui-ci et les informations de sortie du capteur 20 sont donc une image de cette charge.

Ces informations de sortie sont prises en compte par les moyens de contrôle 17 pour modifier la stratégie de pilotage du moteur et des organes associés à celui-ci pour faire fonctionner ce moteur à isoperformance, c'est-à-dire maintenir les performances de celui-ci.

Ceci permet de conserver l'agrément de conduite du véhicule.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, et **caractérisé en ce qu'**il comporte des moyens (17) de contrôle du fonctionnement des moyens (2) d'admission, des moyens (4) de recyclage, du turbocompresseur (5) et/ou du système (8) d'alimentation pour piloter le fonctionnement du moteur, ces moyens étant en outre adaptés pour déclencher une phase de régénération du filtre à particules (7) par combustion des particules piégées dans celui-ci en enclenchant une phase d'injections multiples de carburant dans les cylindres du moteur pendant leur phase de détente, et **en ce que** les moyens de contrôle (17) sont associés à des moyens (18,20) de détermination de la charge en particules du filtre à particules (7), pour réguler le fonctionnement du moteur et des organes associés à celui-ci et permettre un fonctionnement à isoperformance du moteur.

2. Système selon la revendication 1, **caractérisé en ce que** les moyens de détermination de la charge en particules du filtre (7) comprennent un capteur de pression différentielle (20) disposé aux bornes du filtre (7) et raccordé à un calculateur (18) des moyens de contrôle (17).

## Patentansprüche

1. Anordnung zur Regeneration eines Partikelfilters, der in der Abgasleitung eines Dieselmotors eines Kraftfahrzeugs eingebaut ist, welche Anordnung verschiedene Einrichtungen umfasst, die mit dem Motor verbunden sind, unter denen sich
- Einrichtungen (2) zum Zuführen von Luft in den Motor,
- Einrichtungen (4) zum Rückführen des Abgases des Motors zu seinem Einlass,
- ein Turbolader (5),
- ein Oxidationskatalysator (6), der sich stromaufwärts vom Partikelfilter (7) in der Abgasleitung befindet,
- eine Anordnung (8) zur gemeinsamen Kraftstoffversorgung der Zylinder des Motors, die elektrisch gesteuerte Einspritzer (9, 10, 11, 12) umfasst, die mit den Zylindern verbunden sind,
- Einrichtungen (16) zum Zugeben eines Zusatzstoffes zum Kraftstoff, der dazu bestimmt ist, sich auf dem Partikelfilter niederzuschlagen, um die Temperatur der Verbrennung der Partikel herabzusetzen, die darin eingefangen sind, und
- Einrichtungen (20, 21, 22, 23, 24) zum Gewinnen von Informationen bezüglich verschiedener Funktionsparameter des Motors und der damit verbundenen Einrichtungen befinden, welche **dadurch gekennzeichnet ist, dass** sie Einrichtungen (17) zum Steuern der Funktion der Zuführeinrichtungen (2), der Rückführungseinrichtungen (4), des Turboladers (5) und/oder der Versorgungsanordnung (8) umfasst, um die Arbeit des Motors zu steuern, welche Einrichtungen darüber hinaus so ausgebildet sind, dass sie eine Phase der Regeneration des Partikelfilters (7) durch Verbrennung der darin eingefangenen Partikel synchron mit einer Phase der Mehrfacheinspritzungen des Kraftstoffes in die Zylinder des Motors während ihrer Dekompressionsphase auslösen und dass- die Steuereinrichtungen (17) mit Einrichtungen (18, 20) zum Bestimmten der Beladung des Partikelfilters (7) mit Partikeln verbunden sind, um die Arbeit des Motors und der damit verbundenen Einrichtungen zu regulieren und eine Arbeit mit gleich bleibender Leistung des Motors zu ermöglichen.

2. Anordnung nach Anspruch 1, **dadurch gekennzeichnet, dass** die Einrichtungen zum Bestimmen der Beladung des Filters (7) mit Partikeln einen Differenzdruckdetektor (20) umfassen, der über den Anschlüssen des Filters (7) angeordnet und mit einem Rechner (18) der Steuereinrichtungen (17) verbunden ist.

## Claims

1. System for regenerating a particulate filter integrated in an exhaust of a vehicle diesel engine, comprising different members associated with the engine, amongst which :
- means (2) for admitting air into the engine,
- means (4) for recycling exhaust gas from the engine on input of the latter,
- a turbocharger (5),
- an oxidation catalyst (6) arranged upstream of the particulate filter (7) in the exhaust;
- a common fuel feed system (8) for the engine cylinders, comprising electrically controlled injectors (9, 10, 11, 12) associated with these cylinders,
- means (16) for adding to the fuel an additive intended to be deposited on the particulate filter (7) to lower the combustion temperature of the particles trapped therein,
- means (20, 21, 22, 23, 24) for obtaining data relating to the different operating parameters of the engine and members associated with the latter, and **characterised in that** it comprises means (17) for controlling the operation of the admission means (2), the recycling means (4), the turbocharger (5) and/or the feed system to drive the operation of the engine, these means also being adapted to trigger a regeneration phase of the particulate filter (7) by combustion of the particles trapped therein by engaging a phase of multiple fuel injections in the engine cylinders during their expansion phase, and **in that** the control means (17) are associated with means (18, 20) for determining the load, in particles, of the particulate filter (7) to regulate the operation of the engine and the members associated therewith and to allow the engine to operate with isoperformance.

2. System according to claim 1, **characterised in that** the means for determining the load, in particles, of the filter (7) comprises a differential pressure sensor (20) arranged at the terminals of the filter (7) and connected to a computer (18) of the control means (17).
